# EUROPEAN PATENT SPECIFICATION

(11) **EP 2 805 582 B1**
(45) Date of publication and mention of the grant of the patent: **13.05.2015**
(21) Application number: 13706722.9
(22) Date of filing: 08.01.2013
(51) Int. Cl.: G01J 1/02

(54) **LIGHT DETECTOR**
LICHTDETEKTOR
DÉTECTEUR DE LUMIÈRE

(30) Priority: 20.01.2012 US 201261588703 P
(43) Date of publication of application: 26.11.2014
(73) Proprietor: Koninklijke Philips N.V., 5656 AE Eindhoven (NL)
(72) Inventor: FERI, Lorenzo, NL-5656 AE Eindhoven (NL); DE BRUIJN, Frederik Jan, NL-5656 AE Eindhoven (NL); GRITTI, Tommaso, NL-5656 AE Eindhoven (NL)
(74) Representative: van Eeuwijk, Alexander Henricus Waltherus
(86) International application number: PCT/IB2013/050135
(87) International publication number: WO 2013/108146

(56) References cited:
- WO-A1-2007/095740
- WO-A1-2009/093161
- WO-A1-2011/114269

## Description

### FIELD OF THE INVENTION

The present invention relates to a light detector arranged to detect coded light emitted from at least one light source, the light detector comprising photo detector, which is arranged to detect the coded light.

### BACKGROUND OF THE INVENTION

Light detectors arranged to detect coded light emitted from a light source are typically based on the use of a single photo detector, typically a photodiode, to capture the light and convert it into an electrical signal to be further processed. These light detectors are typically equipped with a large bandwidth optimal signal detection, but offer in certain application scenarios a limiting user experience in order to get a good detection. The user has to point very accurately, sniper-like. The latter is due to the fact that, in order to avoid crosstalk between lamps, the light detectors are equipped with optics that limit their Field of View (FOV) and aperture in order to ensure that substantially the light from only one lamp reaches the photo detector.

WO 2007/095740 A1 discloses an example of light detector arranged to detect coded light.

### SUMMARY OF THE INVENTION

It is an object of the present invention to provide a light detector that alleviates the above-mentioned problems of the prior art, and provides a light detector which is easier to handle.

The object is achieved by a light detector according to the present invention as defined in claim 1, and by a method of detecting light according to the present invention as defined in claim 8.

The invention is based on the insight that by combining the use of an image sensor, a screen, and a photo detector it is possible to facilitate the handling of the light detector since the area pointed at can be displayed on the screen.

Thus, in accordance with an aspect of the present invention, there is provided a light detector arranged to detect coded light emitted from at least one light source. The light detector comprises a photo detector, which is arranged to detect the coded light. The light detector further comprises an image sensor, and a screen, wherein a field of view of the photo detector is within the field of view of the image sensor. The light detector is arranged to display an image captured by the image sensor and comprising a light source, the coded light of which is detected by the photo detector, on the screen. Thereby the task of aiming is simpler than in the prior art due to the screen displaying the light source which is aimed at, and which is being decoded.

In the context of the present invention, "coded light" refers to light emitted by a light source for illumination of objects in an environment of the light source, which light emitted comprises embedded data invisible to the human eye, such as data relating to the light source, f.i. a light source ID or operating parameters of the light source (voltage, current, power, colour point, cumulative burning time, etc).

In accordance with an embodiment of the light detector, the photo detector is provided with an optical unit, which is adjustable in order to adjust the field of view of the photo detector. Thereby, the light detector is more adaptable to different circumstances. For instance depending on whether there is a single light source or several light sources, and whether light sources are close to each other or not, either a narrower field of view or a wider field of view can be desirable.

In accordance with an embodiment of the light detector, it further comprises a user input unit, wherein the optical unit is manually adjustable by means of the user input unit.

In accordance with an embodiment of the light detector, it further comprises an automatic optical unit controller, which is arranged to automatically adjust the optical unit for optimizing the coded light detection of the photo detector.

There are different advantages with respective manual and automatic control of the optical unit.

In accordance with an embodiment of the light detector, it further comprises a data acquisitor, which is arranged to acquire and store data about light sources the light of which has been decoded. Stored data about detected light sources is useful in many respects.

In accordance with an embodiment of the light detector, it further comprises a smartphone, which comprises at least the image sensor and the screen. It is advantageous to base the light detector on a smartphone, which is a very common device. The smartphone can be equipped with the light coding capacity, either as an accessory or built in at manufacture of the smartphone.

In accordance with an embodiment of the light detector, it is arranged to present data about at least a presently displayed light source on the screen. It facilitates future controlling of the light source to know its present settings.

According to another aspect of the present invention there is provided a method of detecting light emitted from at least one light source, comprising:
- capturing an image of at least one light source emitting coded light, by means of an image sensor, and displaying the image on a screen (106, 206); and
- detecting and decoding the coded light by means of a photo detector. The method of detecting light provides the corresponding advantages as the above-defined light source.

In accordance with an embodiment of the method, it further comprises automatically adjusting, if several light sources are detected, an optic parameter of the photo detector in order to optimize the reception of light from a desired light source.

In accordance with an embodiment of the method, it further comprises acquiring and storing light source data associated with the detected and decoded light; and presenting the light source data on the screen at the image of the respective corresponding light source.

In accordance with an embodiment of the method, it further comprises extracting and storing a visual signature of each light source of said at least one light source; and generating a map of stored visual signatures. This gives a user the possibility to have an overview of a larger environment than is possible with a single image.

In accordance with an embodiment of the method, it further comprises generating a panoramic image from a sequence of images captured by means of the image sensor. The panoramic image gives a user the possibility to have an overview of a larger environment than is possible with a single instantaneous image, and in real view instead of a symbolic view as the map represents.

These and other aspects, and advantages of the invention will be apparent from and elucidated with reference to the embodiments described hereinafter.

### BRIEF DESCRIPTION OF THE DRAWINGS

The invention will now be described in more detail and with reference to the appended drawings in which:
Fig. 1 is a schematic side view of a first embodiment of the light detector according to the present invention; and
Fig. 2 is a block diagram of a second embodiment of the light detector.

### DESCRIPTION OF PREFERRED EMBODIMENTS

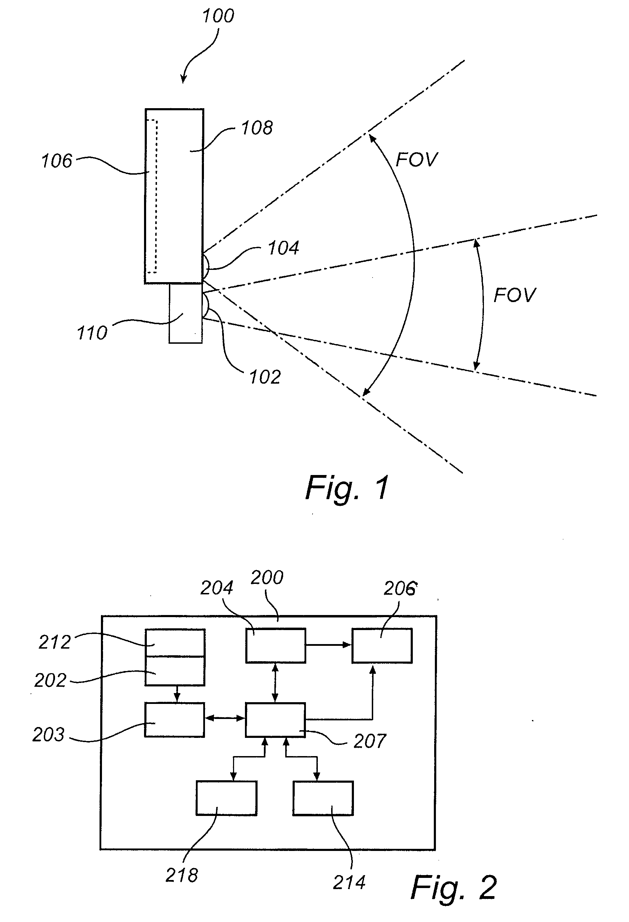

According to a first embodiment of the light detector, as illustrated in Fig. 1, the light detector 100 comprises a photo detector 102, which is arranged to detect coded light, an image sensor 104, and a screen 106. A field of view (FOV) of the photo detector 102 is within the FOV of the image sensor 104. That is, the FOV of the photo detector 102 is as wide as or narrower than the FOV of the image sensor 104, and the photo detector 102 and the image sensor 104 are pointed in the same direction. According to this embodiment, the image sensor 104 and the screen 106 are comprised in a separate first unit 108, such as a smartphone, where the image sensor 104 is an ordinary built in camera arranged at a rear side of the smartphone 108, and the screen 106 is an ordinary screen on the front side of the smartphone 108. The photo detector 102 is comprised in a separate second unit 110. The smartphone 108 has been adapted, primarily by added software, to be connected with the second unit 110, which in turn has been designed to be physically and electrically interconnectable with the smartphone 108.

The light detector 100 is arranged to display a light source, the coded light of which is detected by the photo detector 102, on the screen 106. It is easy to instruct a user of the light detector 100 to point at a desired light source in such a way that the light source is about in the centre of the screen 106, which ensures that it is also in the FOV of the photo detector 102. Therefore, in practice the FOV of the photo detector 102 can be set rather narrow, which has selection advantages as explained above, while it is still possible to keep it less narrow as long it is within the FOV of the image sensor 104.

A second embodiment of the light detector 200 comprises similar parts as the first embodiment, as shown in the block diagram of Fig. 2. Thus, it comprises a photo detector 202, a light decoder 203, an image sensor 204, a screen 206, and a control unit 207. The first embodiment of course comprises a light decoder, a control unit, and other necessary internal parts as well, although not shown since only outer parts are shown in Fig. 1. The photo detector 202 is aligned with the image sensor 204 such that the remote position detected at the centre of the image sensor 204, and thus appearing at the centre of the FOV of the screen 206 is also at the centre of the FOV of the photo detector 202. The alignment typically means that the FOV of the photo detector 202 is embraced by the FOV of the image sensor 204 at a distance from the light detector 200, but not close to the light detector 200, since the photo detector 202 and the image sensor are physically placed side by side, and not on top of each other, which is however obvious to a person skilled in the art, and which is no disadvantage in practice.

In this second embodiment, the photo detector 202 is additionally equipped with an adjustable optical unit 212. Furthermore, the second embodiment comprises a user input unit, or user interface UI 214, which is displayed on the screen 206 as a touch sensitive input member. Thereby, the user is able to adjust the FOV of the photo detector 202 by means of the UI 214 as desired due to different circumstances.

Optionally, or additionally, the light detector 200 can be provided with an automatic optical unit controller, preferably implemented as software run by the control unit 207, which is arranged to automatically adjust the optical unit 212 for optimizing the coded light detection of the photo detector 202.

Furthermore, the light detector 200 comprises a data acquisitor 218. The data acquisitor 218 is arranged to acquire and store data about light sources the light of which has been decoded. That data is displayed on the screen 206. This data acquisition and displaying is of course applicable to any embodiment of the light detector. For instance only the data related to the light source currently in the FOV of the photo detector 202 is displayed on the screen 206, or data related to all light sources detected so far is displayed on the screen 206.

The light source data can be e.g. status information, control parameter information, or other type of data related to the light source or the location where the light source is installed. Here it should be noted that in some cases it is sufficient to retrieve just a unique identifier of a light source by means of the photo detector 202. Once the light source has been identified, other information about the light source, or the location of the light source can be retrieved from a database or by requesting this information from the light source using a secondary communication link, e.g. Radio Frequency communication, between the light source and the light detector 200.

The light detector is operated as follows, according to an embodiment of a method of detecting light from a coded light source according to this invention. First the user directs the light detector 100, 200 towards a light source which the user wants to know the settings about or wants to adjust the settings of. The image sensor 104, 204 captures an image of the light source and its closest surroundings and the image is displayed on the screen 106, 206. The light detector 100, 200 is held such that the chosen light source is positioned about in the centre of the screen 106, 206, i.e. about in the centre of the FOV of the image sensor 104, 204, and consequently about in the centre of the FOV of the photo detector 102, 202. The detected coded light transmitted from the light source is decoded by the light detector 100, 200. Then the user can perform remote control of the light source, i.e. remote adjustment of settings thereof, as currently known in the art.

Additionally, associated light source data is presented on the screen 106, 206 at the image of the light source, e.g. overlaid on the image. The light source data is either extracted from the received light or obtained from some other data source, such as a central data base which the light detector 100, 200 communicates with, or in some other way, as known by the person skilled in the art.

If there are two or more light sources which are detected by the photo detector 102, 202, the FOV of the photo detector, or/and other optic parameters of the photo detector 102, 202, is/are automatically adjusted in order to minimize the amount of light received from the light source or light sources which are not the chosen light source, and to maximize the amount of light received from the chosen light source. Alternatively, in a simple case of non-adjustable optics, the strongest received signal is taken to be the one transmitted from the chosen light source. Further ways to select the chosen light source are feasible as well.

In a further embodiment of the method, during a capturing phase where several light sources are captured, one at a time, information about each one of the captured light sources is acquired and stored. As long as a light source remains on the screen 106, 206, i.e. it is present in the FOV of the image sensor 104, 204, its data is shown on the screen as well.

In a further embodiment of the method according to this invention, a visual signature of each captured light source and its surroundings, as received by the image sensor 104, 204, is extracted and stored. Later on a map of the stored visual signatures is generated, and the user is able to point at and control all the previously captured light sources. In case of separate first and second units 108, 110, as in the first embodiment of the light detector 100, the operations performed by means of the map are possible also with the first unit 108 alone.

In a further embodiment of the method, there is performed an automatic generation of a panoramic image from a sequence of images captured while panning the light detector 100, 200, or a first unit 108 thereof, while remaining in the same location. The obtained panoramic image is used to present the user a visual overview of the controllable set of light sources.

Above embodiments of the light detector and the method of detecting light according to the present invention as defined in the appended claims have been described.

## Claims

1. A light detector arranged to detect coded light emitted from at least one light source, the light detector (100, 200) comprising a photo detector (102, 202), which is arranged to detect and decode the coded light, **characterized in** further comprising an image sensor (104, 204), and a screen (106, 206), wherein a field of view of the photo detector is within the field of view of the image sensor, wherein the light detector is arranged to display an image captured by the image sensor, on the screen, wherein the image comprises the at least one light source, the coded light of which is detected by the photo detector.

2. The light detector according to claim 1, wherein the photo detector (102, 202) is provided with an optical unit (212), which is adjustable in order to adjust the field of view of the photo detector.

3. The light detector according to claim 2, further comprising a user input unit (214), wherein the optical unit (212) is manually adjustable by means of the user input unit.

4. The light detector according to claim 2 or 3, further comprising an automatic optical unit controller (207), which is arranged to automatically adjust the optical unit for optimizing the coded light detection of the photo detector (202).

5. The light detector according to any one of the preceding claims, further comprising a data acquisitor (218), which is arranged to acquire and store data about light sources the light of which has been decoded.

6. The light detector according to any one of the preceding claims, wherein the light detector (100) comprises a smartphone (108), which comprises at least the image sensor (104) and the screen (106).

7. The light detector according to any one of the preceding claims, wherein the light detector (100) is arranged to present data about at least a presently displayed light source on the screen.

8. A method of detecting light emitted from at least one light source, comprising:
- capturing an image of at least one light source emitting coded light, by means of an image sensor (104, 204), and displaying the image on a screen (106, 206); and
- detecting and decoding the coded light by means of a photo detector (102, 202), wherein a field of view of the photo detector (102, 202) is within a field of view of the image sensor (104, 204).

9. The method of detecting light according to claim 8, further comprising:
- automatically adjusting, if several light sources are detected, an optic parameter of the photo detector (102, 202) in order to optimize the reception of light from a desired light source.

10. The method according to claim 8 or 9, further comprising:
- acquiring and storing light source data associated with the detected and decoded light; and
- presenting the light source data on the screen (106, 206) at the image of the respective corresponding light source.

11. The method according to any one of claims 8 to 10, further comprising:
- extracting and storing a visual signature of each light source of said at least one light source; and
- generating a map of stored visual signatures.

12. The method according to any one of claims 8 to 11, further comprising:
- generating a panoramic image from a sequence of images captures by means of the image sensor (104, 204).

## Patentansprüche

1. Lichtdetektor, der so angeordnet ist, dass er codiertes, von mindestens einer Lichtquelle emittiertes Licht detektiert, wobei der Lichtdetektor (100, 200) einen Photodetektor (102, 202) umfasst, der so angeordnet ist, dass er das codierte Licht detektiert und decodiert, **dadurch gekennzeichnet, dass** er weiterhin einen Bildsensor (104, 204) und einen Bildschirm (106, 206) umfasst, wobei ein Sichtfeld des Photodetektors innerhalb des Sichtfeldes des Bildsensors vorgesehen ist, wobei der Lichtdetektor so eingerichtet ist, dass er ein von dem Bildsensor erfasstes Bild auf dem Bildschirm darstellt, wobei das Bild die mindestens eine Lichtquelle umfasst, deren codiertes Licht von dem Photodetektor detektiert wird.

2. Lichtdetektor nach Anspruch 1, wobei der Photodetektor (102, 202) mit einer optischen Einheit (212) versehen ist, die zur Einstellung des Sichtfeldes des Photodetektors einstellbar ist.

3. Lichtdetektor nach Anspruch 2, der weiterhin eine Benutzereingabeeinheit (214) umfasst, wobei die optische Einheit (212) mit Hilfe der Benutzereingabeeinheit manuell einstellbar ist.

4. Lichtdetektor nach Anspruch 2 oder 3, der weiterhin eine automatische Steuerung (207) der optischen Einheit umfasst. die so eingerichtet ist, dass sie die optische Einheit automatisch einstellt, um die Detektion des codierten Lichts seitens des Photodetektors (202) zu optimieren.

5. Lichtdetektor nach einem der vorangegangenen Ansprüche, der weiterhin einen Datenerfasser (218) umfasst, der so eingerichtet ist, dass er Daten über Lichtquellen, deren Licht decodiert wurde, erfasst und speichert.

6. Lichtdetektor nach einem der vorangegangenen Ansprüche, wobei der Lichtdetektor (100) ein Smartphone (108) umfasst, das zumindest den Bildsensor (104) und den Bildschirm (106) umfasst.

7. Lichtdetektor nach einem der vorangegangenen Ansprüche" wobei der Lichtdetektor (100) so eingerichtet ist, dass er Daten über zumindest eine gegenwärtig dargestellte Lichtquelle auf dem Bildschirm präsentiert.

8. Verfahren zum Detektoren von Licht, das von mindestens einer Lichtquelle emittiert wird, wonach:
- ein Bild von mindestens einer codiertes Licht emittierenden Lichtquelle mit Hilfe eines Bildsensors (104, 204) erfasst und das Bild auf einem Bildschirm (106, 206) dargestellt wird; und
- das codierte Licht mit Hilfe eines Photodetektors (102, 202) detektiert und decodiert wird, wobei sich ein Sichtfeld des Photodetektors (102, 202) innerhalb eines Sichtfeldes des Bildsensors (104, 204) befindet.

9. Verfahren zum Detektieren von Licht nach Anspruch 8, wonach weiterhin:
- bei Detektieren mehrerer Lichtquellen ein optischer Parameter des Photodetektors (102, 202) automatisch eingestellt wird, um die Aufnahme von Licht von einer gewünschten Lichtquelle zu optimieren.

10. Verfahren nach Anspruch 8 oder 9, wonach weiterhin:
- dem detektierten und decodierten Licht zugeordnete Lichtquellendaten erfasst und gespeichert werden; und
- die Lichtquellendaten auf dem Bildschirm (106, 206) bei dem Bild der jeweiligen entsprechenden Lichtquelle dargestellt werden.

11. Verfahren nach einem der Ansprüche 8 bis 10, wonach weiterhin:
- eine visuelle Signatur jeder Lichtquelle der mindestens einen Lichtquelle extrahiert und gespeichert wird; und
- ein Speicherabbild gespeicherter visueller Signaturen erzeugt wird.

12. Verfahren nach einem der Ansprüche 8 bis 11, wonach weiterhin:
- aus einer Folge von mit Hilfe des Bildsensors (104, 204) erfassten Bildern ein Panoramabild erzeugt wird.

## Revendications

1. Détecteur de lumière conçu pour détecter une lumière codée émise depuis au moins une source de lumière, le détecteur de lumière (100, 200) comprenant un photodétecteur (102, 202), qui est conçu pour détecter et décoder la lumière codée, **caractérisé en ce qu'**il comprend en outre un capteur d'image (104, 204), et un écran (106, 206), dans lequel un champ de vision du photodétecteur se trouve dans le champ de vision du capteur d'image, dans lequel le détecteur de lumière est conçu pour afficher une image capturée par le capteur d'image sur l'écran, dans lequel l'image comprend la au moins une source de lumière, dont la lumière codée est détectée par le photodétecteur.

2. Détecteur de lumière selon la revendication 1, dans lequel le photodétecteur (102, 202) est pourvu d'une unité optique (212), qui est réglable afin de régler le champ de vision du photodétecteur.

3. Détecteur de lumière selon la revendication 2, comprenant en outre une unité d'entrée utilisateur (214), dans lequel l'unité optique (212) est réglable manuellement au moyen de l'unité d'entrée utilisateur.

4. Détecteur de lumière selon la revendication 2 ou 3, comprenant en outre un dispositif de commande d'unité optique automatique (207), qui est conçu pour régler automatiquement l'unité optique pour optimiser la détection de lumière codée du photodétecteur (202).

5. Détecteur de lumière selon l'une quelconque des revendications précédentes, comprenant en outre un dispositif d'acquisition de données (218), qui est conçu pour acquérir et stocker des données concernant des sources de lumière dont la lumière a été décodée.

6. Détecteur de lumière selon l'une quelconque des revendications précédentes, dans lequel le détecteur de lumière (100) comprend un téléphone intelligent (108), qui comprend au moins le capteur d'image (104) et l'écran (106).

7. Détecteur de lumière selon l'une quelconque des revendications précédentes, dans lequel le détecteur de lumière (100) est conçu pour présenter des données concernant au moins une source de lumière actuellement affichée sur l'écran.

8. Procédé de détection de lumière émise depuis au moins une source de lumière, comprenant :
- la capture d'une image d'au moins une source de lumière émettant une lumière codée, au moyen d'un capteur d'image (104, 204), et l'affichage de l'image sur un écran (106, 206) ; et
- la détection et le décodage de la lumière codée au moyen d'un photodétecteur (102, 202), dans lequel un champ de vision du photodétecteur (102, 202) se trouve dans un champ de vision du capteur d'image (104, 204).

9. Procédé de détection de lumière selon la revendication 8, comprenant en outre :
- le réglage automatique, si plusieurs sources de lumière sont détectées, d'un paramètre optique du photodétecteur (102, 202) afin d'optimiser la réception de lumière provenant d'une source de lumière souhaitée.

10. Procédé selon la revendication 8 ou 9, comprenant en outre :
- l'acquisition et le stockage de données de source de lumière associées à la lumière détectée et décodée ; et
- la présentation des données de source de lumière sur l'écran (106, 206) au niveau de l'image de la source de lumière correspondante respective.

11. Procédé selon l'une quelconque des revendications 8 à 10, comprenant en outre :
- l'extraction et le stockage d'une signature visuelle de chaque source de lumière de ladite au moins une source de lumière ; et
- la génération d'une carte de signatures visuelles stockées.

12. Procédé selon l'une quelconque des revendications 8 à 11, comprenant en outre :
- la génération d'une image panoramique à partir d'une séquence d'images capturées au moyen du capteur d'image (104, 204).
